# FASCICULE DE BREVET EUROPEEN

(11) **EP 0 580 033 B1**
(45) Date de publication et mention de la délivrance du brevet: **09.04.1997**
(21) Numéro de dépôt: 93110976.3
(22) Date de dépôt: 09.07.1993
(51) Int. Cl.: C08F 10/00, C08F 4/64

(54) **Solide catalytique utilisable pour la polymérisation stéréospécifique des alpha-oléfines, procédé pour le fabriquer et procédé pour polymériser des alpha-oléfines en sa présence**
Feste Katalysatorkomponente zur Anwendung bei stereospezifischer alpha-Olefinpolymerisation, Verfahren zur Herstellung derselben und Verfahren zur alpha-Olefinpolymerisation in ihrer Anwesenheit
Solid catalyst for use in stereospecific alpha-olefin polymerization, process of preparation and process using the same

(30) Priorité: 17.07.1992 BE 9200667
(43) Date de publication de la demande: 26.01.1994
(73) Titulaire: SOLVAY (Société Anonyme), B-1050 Bruxelles (BE)
(72) Inventeur: Francois, Philippe, B-1490 Court-Saint-Etienne-Faux (BE); Hallot, Gaetane, B-1090 Bruxelles (BE)
(74) Mandataire: Marckx, Frieda

(56) Documents cités:
- EP-A- 0 068 799
- EP-A- 0 334 411
- FR-A- 2 510 122

## Description

La présente invention concerne un solide catalytique utilisable pour la polymérisation stéréospécifique des alpha-oléfines, un procédé pour le préparer et un procédé de polymérisation des alpha-oléfines en sa présence.

Il est connu de polymériser stéréospécifiquement les alpha-oléfines telles que le propylène, au moyen d'un système catalytique contenant un solide catalytique à base de trichlorure de titane complexé et un cocatalyseur qui est le plus souvent un composé organométallique tel que, par exemple, le chlorure de diéthylaluminium.

Les systèmes catalytiques les plus performants de ce type comprennent un solide à base de trichlorure de titane complexé obtenu en traitant successivement ou simultanément le solide issu de la réduction de tétrachlorure de titane par un réducteur organoaluminique avec un composé électrodonneur et avec un composé halogéné [voir par exemple le brevet US-A-4210738 (SOLVAY & Cie)].

On peut conférer à ces solides une activité et une stéréospécificité maximales en les soumettant à un traitement d'activation consistant à les mettre en contact avec un activateur organoaluminique comprenant le produit de la réaction d'un composé organoaluminique et d'un composé choisi parmi les composés hydroxyaromatiques dont le groupe hydroxyle est stériquement bloqué [demande de brevet EP-A-0261727 (SOLVAY & Cie)]. Un tel traitement permet également d'augmenter la stabilité des solides catalytiques lors de leur stockage.

On peut également mettre en contact ces solides, à un moment quelconque de leur préparation, mais de préférence après l'étape de réduction, avec une alpha-oléfine dans des conditions polymérisantes de manière à obtenir un solide contenant en général entre 5 et 1 000 % en poids d'oléfine prépolymérisée par rapport au poids de trichlorure de titane. Un tel traitement, appelé "prépolymérisation" permet d'obtenir des polymères de bonne morphologie même lorsque la polymérisation est effectuée à haute température. L'alpha-oléfine utilisée dans la pratique pour ce type de traitement est le propylène parce qu'il permet l'utilisation de conditions opératoires particulièrement simples et parce qu'il conduit à la formation, sur le catalyseur, d'un polymère proche de celui susceptible d'être formé lors de la polymérisation [voir par exemple les demandes de brevet EP-A-0068799 (Exxon Research & Engineering), EP-A-0261727 (SOLVAY & Cie) et le brevet US-A-4295991 (Exxon)].

Le séchage des solides à base de trichlorure de titane obtenu nécessite la prise de précautions particulières si l'on souhaite éviter l'agglomération des particules de solide entre elles ou sur les parois du réacteur.

La présente invention vise à fournir un solide catalytique à base de trichlorure de titane complexé présentant une stéréospécificité et une activité maximales ainsi qu'une aptitude au séchage supérieure à celle observée avec les produits de l'art antérieur.

La présente invention concerne à cet effet un solide catalytique à base de trichlorure de titane complexé utilisable pour la polymérisation stéréospécifique des alpha-oléfines obtenu selon un procédé comprenant au moins les étapes suivantes :
(a) réduction de tétrachlorure de titane (TiCl₄) par un composé organoaluminique (1) pour obtenir un solide réduit à base de trichlorure de titane (TiCl₃);
(b) traitements simultanés ou successifs du solide réduit à base de TiCl₃ avec un composé électrodonneur (2) et un composé halogéné (3);
(c) activation par mise en contact avec un activateur;
(d) séparation du solide catalytique de son milieu de préparation
caractérisé en ce que le solide réduit à base de TiCl₃ issu de l'étape (a) comprend en outre de 1 à 1 000 % en poids d'éthylène prépolymérisé par rapport à la quantité de TiCl₃.

De préférence, la teneur en éthylène prépolymérisé dans les solides catalytiques à base de trichlorure de titane complexé selon la présente invention est supérieure ou égale à 2 % en poids par rapport à la quantité de TiCl₃. Le plus souvent cette teneur en éthylène prépolymérisé est inférieure ou égale à 100 % en poids et de préférence inférieure ou égale à 20 % en poids par rapport à la quantité de TiCl₃.

Ces solides de couleur généralement violette contiennent, outre le polyéthylène prépolymérisé, du trichlorure de titane complexé avec le composé électrodonneur (2) ainsi qu'une certaine quantité d'activateur provenant du traitement de l'étape d'activation (c) et qui est fixé au solide. Le trichlorure de titane qui est présent dans le solide catalytique en proportion généralement supérieure à 50 % en poids et généralement inférieure à 85 % en poids se présente sous la forme cristalline δ telle que définie dans le Journal of Polymer Science 51, pages 399-410, (1961). La quantité d'activateur est le plus souvent comprise entre 5 et 500 g par kg de TiCl₃ présent dans le solide, de préférence entre 50 et 300 g/kg.

Selon la présente invention, les réducteurs organoaluminiques (1) sont des composés qui contiennent au moins un radical hydrocarboné fixé directement sur l'atome d'aluminium. Des exemples de composés de ce type sont les mono-, di- et trialkylaluminiums éventuellement substitués par des atomes de chlore ou des groupements alkoxy et dont les radicaux alkyles contiennent de 1 à 12, de préférence de 1 à 6 atomes de carbone, tels que le triéthylaluminium, les isoprénylaluminiums, l'hydrure de diisobutylaluminium, le diéthyléthoxyaluminium et le sesquichlorure d'aluminium.
Les meilleurs résultats sont obtenus avec les chlorures de dialkylaluminium et, en particulier, avec le chlorure de diéthylaluminium.

Les composés électrodonneurs (2) sont choisis de préférence dans la famille des éthers aliphatiques, et plus particulièrement parmi ceux dont les radicaux aliphatiques comprennent de 2 à 8 atomes de carbone, de préférence de 4 à 6 atomes de carbone. Un exemple typique d'éther aliphatique donnant de très bons résultats est l'éther diisoamylique. L'éther di-n-butylique convient également bien.

Les composés halogénés (3) sont habituellement choisis parmi les composés halogénés inorganiques, les composés halogénés organiques, les composés interhalogénés et les halogènes. Parmi ces composés (3), on peut citer :
- à titre de composés halogénés inorganiques, les halogénures de métaux et de non métaux, tels que les halogénures de titane et de silicium par exemple;
- à titre de composés halogénés organiques, les hydrocarbures halogénés tels que les alcanes halogénés et les tétrahalogénures de carbone par exemple;
- à titre de composés interhalogénés, les chlorure et bromure d'iode par exemple;
- à titre d'halogène, le chlore, le brome et l'iode.

Les meilleurs résultats ont été obtenus avec le tétrachlorure de titane. L'hexachloroéthane convient également bien.

L'activateur est choisi parmi des composés organoaluminiques (4) et les produits de réaction d'un composé organoaluminique (4) et d'un composé hydroxyaromatique dont le groupe hydroxyle est stériquement bloqué (5). L'activateur préféré selon la présente invention est choisi parmi les produits de réaction d'un composé organoaluminique (4) avec un composé hydroxyaromatique (5).

Le composé organoaluminique (4) est choisi de préférence parmi les trialkylaluminiums et les chlorures d'alkylaluminium. Parmi ces composés, les meilleurs résultats ont été obtenus avec le triéthylaluminium et le chlorure de diéthylaluminium. Le composé hydroxyaromatique dont le groupe hydroxyle est stériquement bloqué (5) est choisi de préférence parmi les phénols di-tert-alkylés dans les positions ortho par rapport aux groupes hydroxyles et les esters de l'acide 3-(3',5'-di-tert-butyl-4'-hydroxyphényl)propionique. Parmi ces composés, les meilleurs résultats ont été obtenus avec le 2,6-di-tert-butyl-4-méthyl-phénol et le 3-(3',5'-di-tert-butyl-4'-hydroxyphényl)propionate de n-octadécyle.

La présente invention concerne aussi un procédé de préparation des solides catalytiques. Pour ce faire, le solide réduit à base de TiCl₃ issu de l'étape (a) est mis en contact avec une faible quantité d'éthylène dans des conditions polymérisantes de manière à obtenir un solide contenant de 1 à 1 000 % en poids d'éthylène prépolymérisé.

Cette réaction, appelée "prépolymérisation" s'effectue généralement au sein d'une suspension du solide réduit à base de TiCl₃ dans un diluant hydrocarboné inerte généralement choisi parmi les hydrocarbures aliphatiques, cycloaliphatiques et aromatiques liquides, tels que les alcanes, isoalcanes, cycloalcanes liquides et le benzène ou leurs mélanges.

Selon la présente invention, l'éthylène peut être ajouté directement au mélange réactionnel issu de l'étape de réduction (a) ou il peut être ajouté au solide réduit à base de trichlorure de titane obtenu à l'issue de cette étape et qui a au préalable été séparé de son milieu de préparation et éventuellement lavé.

Dans certains cas il peut s'avérer nécessaire d'ajouter au milieu de prépolymérisation une quantité substantielle d'au moins un composé organoaluminique (1) de même nature que ceux utilisés lors de l'étape de réduction (a).

On préfère généralement effectuer la réaction de prépolymérisation directement à partir du milieu réactionnel issu de l'étape (a) qui contient, outre le TiCl₃, le produit de réduction du composé organoaluminique (1) et des traces de ce dernier.

La concentration en TiCl₃ de la suspension est généralement de 50 à 600 g par litre de suspension, plus particulièrement de 100 à 450 g par litre et de préférence de 150 à 350 g par litre.

La proportion de composé organoaluminique (1) mis en oeuvre varie selon les conditions expérimentales. Elle est le plus souvent telle que le rapport atomique entre l'aluminium et le titane présents dans la suspension est de 0,1 à 3. On obtient de bons résultats lorsque ce rapport varie de 0,5 à 2.

La quantité d'éthylène mis en oeuvre, exprimée en % en poids par rapport à la quantité de TiCl₃ présent dans la suspension varie généralement de 1 à 1 000. On obtient de bons résultats lorsque cette quantité est inférieure ou égale à 100 % en poids et de préférence inférieure ou égale à 20 % en poids. En général cette quantité est supérieure ou égale à 2 % en poids.

Selon la présente invention l'éthylène est mis en oeuvre à une pression partielle de 0,1 à 9,8 bar (0,1 à 10 kg/cm²). Cette pression partielle est ensuite maintenue constante par introduction d'éthylène jusqu'à ce que l'on ait incorporé au solide réduit la quantité souhaitée d'éthylène prépolymérisé. De préférence la pression partielle d'éthylène est supérieure ou égale à 0,2 bar (0,2 kg/cm²) et plus particulièrement supérieure ou égale à 0,5 bar (0,5 kg/cm²). Le plus souvent cette pression partielle est inférieure ou égale à 5 kg/cm² et plus particulièrement inférieure ou égale à 3 kg/cm².

La durée de la réaction de prépolymérisation doit être suffisante pour permettre l'incorporation de la quantité souhaitée d'éthylène prépolymérisé. La détermination de cette durée, qui dépend des conditions opératoires, peut dès lors nécessiter des essais de routine préalables. Ainsi la durée de la réaction peut varier de 1 minute à 15 heures, de préférence de 2 minutes à 10 heures et plus particulièrement de 5 minutes à 5 heures. Cette durée peut dépendre de la quantité de solide réduit à base de TiCl₃ mis en oeuvre.

La température de la suspension du solide réduit à base de TiCl₃ durant la prépolymérisation est généralement de 0 à 100 °C. De préférence cette température est supérieure ou égale à 10 °C et plus particulièrement supérieure ou égale à 30 °C. On obtient de bons résultats lorsque le milieu réactionnel est maintenu à une température inférieure ou égale à 80 °C et de préférence inférieure ou égale à 75 °C.

Le procédé de préparation des solides catalytiques selon la présente invention peut présenter diverses variantes.

On peut par exemple effectuer la réaction de prépolymérisation en présence d'une huile de silicone. Cette huile de silicone est généralement choisie parmi les composés répondant à la formule 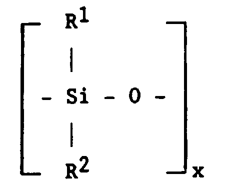 dans laquelle :
- R¹ et R² représentent des radicaux hydrocarbonés identiques ou différents contenant de 1 à 10 atomes de carbone, choisis préférentiellement parmi les radicaux alkyle contenant de 1 à 5 atomes de carbone et les radicaux aryle; et
- x est un nombre de 3 à 2000.

De préférence R¹ et R² sont identiques et sont choisis parmi les radicaux méthyle et phényle. x est le plus souvent compris entre 4 et 100.

La viscosité cinématique des huiles utilisables dans ce procédé est généralement de 0,5 à 2 10⁶ cSt (5. 10⁻⁷ à 2 m²/s), de préférence de 5 à 30000 cSt (5. 10⁻⁶ à 3.10⁻² m²/s).

On obtient de bons résultats avec les huiles commerciales appelées communément "huiles de diméthylsilicone" ou "méthylpolysiloxanes".

L'huile de silicone peut être ajoutée au milieu réactionel à n'importe quel moment précédant l'introduction d'éthylène. Elle peut par exemple être ajoutée juste avant l'introduction de ce dernier ou dès le début de l'étape (a).

Lorsque la réaction de prépolymérisation est effectuée en présence d'huile de silicone, la formation de dépôt sur les parois du réacteur déjà particulièrement faible dans le cas de la présente invention peut être encore avantageusement diminuée voire supprimée.

On trouvera d'autres détails relatifs à cette addition d'huile de silicone lors de la prépolymérisation dans le brevet US-A-4675368.

Il peut également s'avérer avantageux, lorsque l'on souhaite obtenir un prépolymère de plus faible masse moléculaire moyenne d'introduire lors de cette prépolymérisation un agent de régulation de la masse moléculaire tel que par exemple l'hydrogène, le diéthylzinc, les alcools, les éthers ou les halogénures d'alkyle. L'hydrogène convient bien.

Ces agents de réglage de la masse moléculaire sont introduits dans le milieu réactionnel dans des proportions qui dépendent des conditions opératoires utilisées et de la masse moléculaire moyenne souhaitée pour le prépolymère. La détermination de ces proportions peut dès lors nécessiter des essais de routine préalable.

On peut également effectuer cette prépolymérisation en combinant les deux variantes c'est-à-dire en introduisant une huile de silicone et un agent de régulation de la masse moléculaire dans le milieu réactionnel.

Le solide réduit à base de TiCl₃ prépolymérisé est ensuite généralement séparé de son milieu de préparation et de préférence lavé avec un diluant hydrocarboné inerte tel que décrit ci-avant, avant d'être soumis aux traitements relatifs aux étapes (b) et (c) pour obtenir un solide catalytique hautement actif et stéréospécifique, non friable et susceptible d'être stocké pendant de relativement longues périodes sans perdre ses propriétés.

De préférence l'étape (b) est réalisée de manière à ce que le traitement par le composé halogéné (3) est effectué consécutivement au traitement par le composé électrodonneur (2). En outre, on obtient particulièrement de bons résultats lorsque le traitement au moyen du composé halogéné (3) se fait en présence d'une quantité résiduelle de composé électrodonneur (2). Cette quantité résiduelle peut résulter d'une élimination partielle de la solution utilisée lors du traitement avec le composé électrodonneur (2) ou d'une addition supplémentaire de composé électrodonneur lors du traitement au moyen du composé halogéné (3).

Les étapes (a), (b) et (c) peuvent être effectuées dans un diluant hydrocarboné inerte tel que décrit ci-avant. Les alcanes et leurs mélanges conviennent particulièrement bien pour la réalisation de ces étapes.

On trouvera d'autres détails en rapport avec les étapes (a), (b), et (c), notamment avec les conditions opératoires dans lesquelles on les effectue, les quantités respectives des réactifs utilisés ainsi que la forme physique sous laquelle ils sont mis en oeuvre dans la demande de brevet EP-A-261727 (SOLVAY & Cie) et dans les brevets US-A-4210738 et US-A-4210729 (SOLVAY & Cie).

Un avantage important du procédé de préparation des solides catalytiques de la présente invention est que la quasi totalité de l'éthylène prépolymérisé est fixée sur le solide réduit. De ce fait, les effluents de la réaction, qui ne contiennent que peu ou pas de prépolymère, peuvent facilement être épurés et recyclés. Un autre avantage du procédé est que l'on n'observe que peu ou pas de dépôt sur les parois du réacteur utilisé pour la préparation du solide catalytique. Dans une des variantes du procédé selon l'invention un tel dépôt peut même être presque totalement supprimé. On constate également que ce prépolymère étant substantiellement cristallin, il peut être facilement éliminé de ces effluents par tous les procédés physiques connus à cet effet tels que la filtration ou la centrifugation par exemple.

Selon la présente invention, le solide catalytique à base de trichlorure de titane prépolymérisé, activé, séparé de son milieu de préparation et éventuellement lavé est de préférence séché jusqu'à ce que sa teneur en diluant hydrocarboné liquide soit inférieure ou égale à 1 % en poids et de préférence inférieure ou égale à 0,5 % en poids par rapport au poids total de solide catalytique.

Des conditions opératoires convenant particulièrement bien à cet effet sont décrites dans le brevet US-A-4210736 (SOLVAY & Cie).

De préférence, le solide catalytique est séché dans un lit fluidisé par un gaz inerte tel que par exemple de l'azote à une température comprise généralement entre 50 et 80 °C.

Lors du séchage des solides catalytiques selon la présente invention, on n'observe pas d'agglomération des particules de solide catalytique entre elles ou à la surface du réacteur et ce contrairement à ce qui est couramment observé lorsque la prépolymérisation est effectuée avec une autre oléfine.

Ainsi séché le solide catalytique selon la présente invention se présente sous la forme d'une poudre dont les particules, de forme générale sensiblement sphérique, ont un diamètre moyen de 5 à 100 µm. Cette poudre de bonne coulabilité contient moins de 10 % en poids d'agglomérats de dimension supérieure à 1 mm. En général la proportion de ces agglomérats est inférieure à 5 % en poids et de préférence elle ne dépasse pas 2 % en poids.

Les solides catalytiques selon la présente invention peuvent être stockés sous forme sèche ou sous forme de suspension dans un diluant hydrocarboné inerte pendant de longues périodes sans perdre leurs propriétés avant d'être mis en oeuvre conjointement avec un cocatalyseur choisi parmi les composés organiques des métaux des groupes Ia, IIa et IIIa du Tableau Périodique (version publiée dans Handbook of Chemistry and Physics 50e édition).

Le cocatalyseur est choisi de préférence parmi les composés organoaluminiques répondant à la formule :

Al Rₙ X₃₋ₙ

dans laquelle :
- R est un radical hydrocarboné contenant de 1 à 18 atomes de carbone et de préférence de 1 à 12 atomes de carbone choisi généralement parmi les radicaux alkyle, aryle, arylalkyle et cycloalkyle; les meilleurs résultats étant obtenus lorsque R est choisi parmi les radicaux alkyle contenant de 2 à 8 atomes de carbone;
- X est un halogène choisi parmi le fluor, le chlore, le brome et l'iode; les meilleurs résultats étant obtenus lorsque X est le chlore;
- n est un nombre quelconque tel que 0<n≤3 et de préférence tel que 1,5<n≤3.

On peut également introduire dans le milieu de polymérisation, un terconstituant conventionnellement connu pour améliorer les propriétés du solide catalytique. Ces terconstituants sont généralement choisis parmi les composés électrodonneurs comprenant un ou plusieurs atomes ou groupements susceptibles d'assurer la coordination avec les atomes de titane ou d'aluminium présents dans le milieu de polymérisation.

A titre d'exemples de tels composés, on peut citer les éthers, les esters, les amides et les organosilanes.

La quantité des différents composés des systèmes catalytiques selon l'invention mis en oeuvre pour cette polymérisation n'est pas critique. La quantité totale de cocatalyseur organoaluminique mis en oeuvre est généralement telle que sa concentration dans le milieu de polymérisation est supérieure ou égale à 0,1 mmole par litre de diluant, de monomère liquide ou de volume de réacteur et de préférence supérieure ou égale à 0,5 mmole par litre.

La quantité de solide catalytique mise en oeuvre est généralement choisie de manière à ce que la concentration en TiCl₃ dans le milieu de polymérisation soit supérieure ou égale à 0,01 mmole par litre de diluant, de monomère liquide ou de volume de réacteur et de préférence supérieure ou égale à 0,05 mmole par litre.

Le rapport des quantités de composé organométallique et de solide catalytique n'est pas critique non plus. On le choisit généralement de manière à ce que le rapport molaire du composé organométallique au TiCl₃ présent dans le solide soit de 0,1 à 50 et de préférence de 1 à 20.

La quantité de terconstituant mise en oeuvre est généralement telle que le rapport molaire entre ce composé et le composé organométallique est inférieur à 1.

Les systèmes catalytiques ainsi définis s'appliquent à la polymérisation des oléfines à insaturations terminales dont la molécule contient de 2 à 18 et de préférence de 2 à 8 atomes de carbone telles que l'éthylène, le propylène, le 1-butène, le 1-pentène, les méthyl-1-butènes, l'hexène, les 3- et 4-méthyl-1-pentènes. Ils sont particulièrement intéressants pour la polymérisation stéréospécifique du propylène, du 1-butène et du 4-méthyl-1-pentène en polymères cristallins. Ils s'appliquent également à la copolymérisation de ces alpha-oléfines avec des comonomères non identiques et/ou des dioléfines comprenant de 4 à 18 atomes de carbone. De préférence, les dioléfines sont des dioléfines aliphatiques non conjuguées telles que l'hexadiène-1,4, des dioléfines monocycliques non conjuguées telles que le 4-vinyl-cyclohexène, des dioléfines alicycliques ayant un pont endocyclique telles que le dicyclopentadiène, le méthylène- et l'éthylidènenorbornène et des dioléfines aliphatiques conjuguées telles que le butadiène ou l'isoprène.

Ils s'appliquent encore à la fabrication de copolymères appelés à blocs qui sont constitués d'alpha-oléfines et/ou de dioléfines. Ces copolymères à blocs consistent en des blocs distincts de composition variable; chaque bloc consistant en un homopolymère d'une alpha-oléfine ou en un copolymère statistique comprenant une alpha-oléfine et au moins un comonomère choisi parmi les alpha-oléfines et les dioléfines. Les alpha-oléfines et les dioléfines sont choisies parmi celles mentionnées ci-dessus.

Les systèmes catalytiques selon l'invention conviennent particulièrement bien pour la fabrication d'homopolymères du propylène et de copolymères de ce dernier contenant au total au moins 50 % en poids de polypropylène et de préférence au moins 60 % en poids de polypropylène.

On remarque, par ailleurs, que les films ou les feuilles obtenus au moyen des catalyseurs selon la présente invention ne présentent pas d'imperfections optiques attribuables à la présence dans le solide catalytique de polyéthylène prépolymérisé.

La température de polymérisation est choisie généralement entre 20 et 200 °C et de préférence de 50 à 100 °C, les meilleurs résultats étant obtenus de 60 à 95 °C. La pression est choisie généralement entre la pression atmosphérique et 50 atmosphères et de préférence entre 10 et 40 atmosphères. Cette pression est bien entendu fonction de la température à laquelle s'effectue la polymérisation.

La polymérisation peut être effectuée en continu ou en discontinu, selon n'importe quel procédé connu : en solution ou en suspension dans un diluant hydrocarboné inerte, tel que ceux définis en rapport avec la préparation du solide catalytique. Le diluant utilisé préférentiellement lors de la polymérisation est généralement choisi parmi le butane, l'isobutane, l'hexane, l'heptane, le cyclohexane, le méthylcyclohexane ou leur mélange. On peut également opérer la polymérisation dans le monomère ou dans un des monomères maintenu à l'état liquide ou encore en phase gazeuse.

Les constituants du système catalytique peuvent être ajoutés séparément au milieu de polymérisation. On peut également les mettre en contact, à une température comprise entre - 40 et 80 °C, pendant une durée qui est dépendante de cette température et qui peut aller de quelques secondes à plusieurs heures voire plusieurs jours avant de les introduire dans le milieu de polymérisation.

La masse moléculaire des polymères fabriqués selon le procédé de l'invention peut être réglée par addition au milieu de polymérisation d'un ou plusieurs agents de réglage de la masse moléculaire des polyoléfines tels que ceux cités ci-avant pour la prépolymérisation du solide catalytique. Dans ce cas également, l'hydrogène convient particulièrement bien.

Un avantage des systèmes catalytiques selon la présente invention est que les solides catalytiques peuvent être introduits sous la forme d'une poudre sèche et non sous la forme de suspension dans des diluants hydrocarbonés inertes dont l'utilisation, dans les procédés de polymérisation dans le monomère liquide ou gazeux peut conduire à des effets non souhaités tels que, par exemples, une dilution du milieu de polymérisation ou une augmentation du point de rosée du mélange gazeux. L'utilisation de ces solides catalytiques sous forme sèche permet également de diminuer voire de supprimer les quantités résiduelles de diluant hydrocarboné dans les polymères recueillis.

Les exemples suivants servent à illustrer l'invention.

La signification des symboles utilisés dans ces exemples, les unités exprimant les grandeurs mentionnées et les méthodes de mesure de ces grandeurs sont explicitées ci-dessous.
- α: = activité catalytique exprimée conventionnellement en grammes de polymère obtenus par heure et par gramme de TiCl₃ contenu dans le solide catalytique mis en oeuvre. Cette activité est appréciée indirectement à partir de la détermination de la teneur résiduelle en titane dans le polymère par fluorescence X.
- PSA: = poids spécifique apparent du polymère insoluble exprimé en g/dm³.
- fTri: = indice d'isotacticité du polymère, apprécié par la fraction molaire de triades isotactiques (enchaînement séquencé de trois unités monomériques de propylène en configuration méso) dans le polymère total. Cette valeur est déterminée par résonance magnétique nucléaire en ¹³C comme décrit dans Macromolecules, volume 6, n° 6, page 925, (1973) et dans les références (3) à (9) de cette publication.
- I.I.: = indice d'isotacticité du polymère, apprécié par la fraction de ce dernier, exprimée en % en poids par rapport à la quantité totale de polymère recueilli, qui est insoluble dans l'heptane bouillant.
- MFI: = indice de fluidité en fondu mesuré sous une charge de 2,16 kg à 230 °C et exprimé en g/10min (norme ASTM D 1238 (1986)).

### Exemple 1

### 1. Préparation du solide catalytique

Dans un réacteur de 800 ml équipé d'un agitateur à 2 pales tournant à 400 tours/min, on introduit sous atmosphère d'azote 90 ml d'hexane sec et 60 ml de TiCl₄ pur. Cette solution hexane-TiCl₄ est refroidie à 0 (± 1) °C. Endéans 4 h on y additionne une solution constituée de 190 ml d'hexane et de 70 ml de chlorure de diéthylaluminium (DEAC) en maintenant une température de 0 (± 1) °C dans le réacteur.

Après addition de la solution de DEAC-hexane, le milieu de réaction, constitué par une suspension de fines particules est maintenu sous agitation à 1 (± 1) °C pendant 15 min avant d'être porté en 1 h à 25 °C, maintenu 1 h à cette température et porté en 1 h environ à 65 °C. Le milieu est maintenu sous agitation pendant 2 h à 65 °C puis on abaisse la température à 55 °C tout en dégazant l'autoclave jusqu'à une pression de 1,1 bar absolu. On introduit alors dans le ciel gazeux du réacteur de l'éthylène sous une pression partielle de 1 bar. Cette introduction est poursuivie pendant un temps suffisant (environ 20 minutes) pour obtenir environ 79 g d'éthylène prépolymérisé par kg de solide final.

Les effluents qui contiennent une quantité non mesurable d'éthylène prépolymérisé sont alors séparés du solide et ce dernier est lavé par de l'hexane sec.

Le solide réduit ainsi prépolymérisé est mis en suspension dans 456 ml de diluant (hexane) et on y ajoute 86 ml d'éther diisoamylique (EDIA). La suspension est agitée à 250 tr/min pendant 1 h à 50 °C puis décantée. Après avoir éliminé le surnageant, on remet le solide en suspension dans 210 ml d'hexane et on y ajoute 52 ml de TiCl₄. La suspension est ensuite maintenue sous agitation (150 tr/min) à 75 °C pendant 2 h. Après lavage, le solide obtenu est remis en suspension dans de l'hexane (à raison de 4 ml d'hexane par gramme de solide) et mis en contact avec 120 ml d'une solution contenant, par litre d'hexane, 80 g de DEAC et 176,2 g de 3-(3',5'-di-tert-butyl-4'-hydroxyphényl)propionate de n-octadécyle commercialisé sous la dénomination IRGANOX 1076 par CIBA-GEIGY.

La suspension ainsi additionnée est maintenue pendant 1 heure à 30 °C sous agitation.

Après décantation, le solide catalytique activé résultant est lavé puis séché dans un lit fluidisé sous azote à 70 °C de manière à obtenir une poudre fluide de couleur violette dont les particules ont une dimension moyenne en poids de 25 µm et qui ne contient pas plus de 1 % en poids de blocs de dimension supérieure à 1 mm. Ce solide contient par kg, 641 g de TiCl₃ et 79 g d'éthylène prépolymérisé soit 12 % en poids de prépolymère par rapport à la quantité de TiCl₃ présente dans le solide.

### 2 - Polymérisation du propylène en suspension dans le monomère liquide

Dans un autoclave de 5 l, préalablement séché, on introduit sous balayage d'azote sec :
- 57 mg du solide catalytique tel que décrit au point 1;
- 392 mg de chlorure de diéthylaluminium (DEAC) se présentant sous forme d'une solution dans l'hexane à 200 g/l;
- une pression d'hydrogène d'environ 1 bar;
- 3 l de propylène liquide.

On maintient le réacteur à 70 °C pendant 3 heures puis on dégaze le propylène excédentaire et on récupère, avec une activité α de 5048, un polymère sec contenant 20,5 ppm de titane et présentant les caractéristiques suivantes :
- PSA =: 470;
- fTri =: 93;
- I.I. =: 96;
- MFI =: 10,2.

### Exemple 2

On prépare un solide catalytique comme décrit à l'exemple 1. Toutefois la prépolymérisation est effectuée en introduisant au début de la réaction de prépolymérisation de l'hydrogène sous une pression partielle de 0,1 bar.

Le solide catalytique séché ainsi obtenu contient 772 g de TiCl₃ et 79 g d'éthylène prépolymérisé.

Utilisé dans le test de polymérisation du propylène décrit à l'exemple 1, partie 2, ce solide catalytique conduit, avec une activité de 4928 à un polypropylène présentant un PSA de 490, un MFI de 6,2 et un fTri de 92.

### Exemple 3R

Cet exemple est donné à titre de comparaison.

On prépare un solide catalytique comme décrit à l'exemple 1 mais en introduisant à la place de l'éthylène, du propylène gazeux sous une pression de 2 bars. Cette introduction est maintenue pendant environ 45 minutes de manière à obtenir par kg de produit final 65 g de propylène prépolymérisé.

Les effluents de l'étape de prépolymérisation contiennent 15 % en poids de polymère de propylène soit 68 % en poids du propylène introduit dans le milieu réactionnel. Ce polymère se présente sous forme d'une masse visqueuse.

Lorsque l'on souhaite sécher le solide catalytique ainsi obtenu dans les conditions de l'exemple 1, partie 1, on obtient une masse compacte inutilisable en tant que telle pour la polymérisation et qui, après effritement mécanique contient encore plus de 25 % en poids de blocs de dimension supérieure à 1mm.

## Revendications

1. Solide catalytique à base de trichlorure de titane complexé utilisable pour la polymérisation stéréospécifique des alpha-oléfines obtenu selon un procédé comprenant au moins les étapes suivantes :
(a) réduction de tétrachlorure de titane (TiCl₄) par un composé organoaluminique pour obtenir un solide réduit à base de trichlorure de titane (TiCl₃);
(b) traitements simultanés ou successifs du solide réduit à base de TiCl₃ avec un composé électrodonneur et un composé halogéné;
(c) activation par mise en contact avec un activateur;
(d) séparation du solide catalytique de son milieu de préparation;
dans lequel le solide réduit à base de TiCl₃ issu de l'étape (a) comprend en outre de 1 à 1 000 % en poids d'éthylène prépolymérisé par rapport à la quantité de TiCl₃.

2. Solide catalytique selon la revendication 1, caractérisé en ce que l'activateur est choisi parmi les composés organoaluminiques et les produits de réaction d'un composé organoaluminique et d'un composé hydroxyaromatique dont le groupe hydroxyle est stériquement bloqué.

3. Solide catalytique selon les revendications 1 et 2, caractérisé en ce qu'il a été séché jusqu'à ce que sa teneur en diluant hydrocarboné liquide soit inférieure ou égale à 1 % en poids par rapport au poids total de solide catalytique.

4. Solide catalytique selon les revendications 1 à 3, caractérisé en ce que la quantité d'éthylène prépolymérisé est de 2 à 20 % en poids par rapport au poids de TiCl₃.

5. Procédé pour la préparation d'un solide catalytique à base de trichlorure de titane complexé utilisable pour la polymérisation stéréospécifique des alpha-oléfines comprenant au moins les étapes suivantes :
(a) réduction de tétrachlorure de titane (TiCl₄) par un composé organoaluminique pour obtenir un solide réduit à base de trichlorure de titane (TiCl₃);
(b) traitements simultanés ou successifs du solide réduit à base de TiCl₃ avec un composé électrodonneur et un composé halogéné;
(c) activation par mise en contact avec un activateur;
(d) séparation du solide catalytique de son milieu de préparation;
dans lequel le solide réduit à base de TiCl₃ issu de l'étape (a) est mis en contact avec une faible quantité d'éthylène dans des conditions polymérisantes de manière à obtenir un solide contenant de 1 à 1 000 % en poids d'éthylène prépolymérisé par rapport à la quantité de TiCl₃.

6. Procédé selon la revendication 5, caractérisé en ce que la prépolymérisation de l'éthylène s'effectue au sein d'une suspension du solide réduit à base de TiCl₃ dans un diluant hydrocarboné inerte.

7. Procédé selon les revendications 5 et 6, caractérisé en ce que l'éthylène est ajouté directement au mélange réactionnel issu de l'étape de réduction (a).

8. Procédé selon les revendications 5 à 7, caractérisé en ce que la quantité d'éthylène mis en oeuvre, exprimée par rapport à la quantité de TiCl₃, varie de 2 à 20 % en poids.

9. Procédé selon l'une quelconque des revendications 5 à 8, caractérisé en ce que l'éthylène est mis en oeuvre à une pression partielle de 0,2 à 3 bar (0,2 à 3 kg/cm²).

10. Procédé selon l'une quelconque des revendications 5 à 9, caractérisé en ce l'éthylène est mis en contact avec le TiCl₃ pendant une durée de 2 minutes à 5 heures.

11. Procédé selon les revendications 5 à 10, caractérisé en ce que, durant la prépolymérisation, la température de la suspension du solide réduit à base de TiCl₃ est de 30 à 80 °C.

12. Procédé selon les revendications 5 à 11, caractérisé en ce que l'on introduit, lors de la prépolymérisation, un agent de régulation de la masse moléculaire moyenne du prépolymère.

13. Procédé selon les revendications 5 à 12, caractérisé en ce que la prépolymérisation est effectuée en présence d'une huile de silicone.

14. Procédé selon les revendications 5 à 13, caractérisé en ce qu'il comprend en outre le séchage du solide catalytique à base de trichlorure de titane complexé jusqu'à ce que sa teneur en diluant hydrocarboné liquide soit inférieure ou égale à 1 % en poids par rapport au poids total de solide catalytique.

15. Procédé pour la polymérisation ou la copolymérisation des alpha-oléfines en présence d'un système catalytique comprenant un cocatalyseur choisi parmi les composés organiques des métaux des groupes Ia, IIa et IIIa du Tableau Périodique et un solide catalytique à base de trichlorure de titane complexé qui a été préparé selon un procédé comprenant au moins les étapes suivantes :
(a) réduction de TiCl₄ par un composé organoaluminique pour obtenir un solide réduit à base de TiCl₃;
(b) traitements simultanés ou successifs du solide réduit à base de TiCl₃ avec un composé électrodonneur et un composé halogéné;
(c) activation par mise en contact avec un activateur;
(d) séparation du solide catalytique de son milieu de préparation;
dans lequel le solide réduit à base de TiCl₃ issu de l'étape (a) comprend en outre de 1 à 1 000 % en poids d'éthylène prépolymérisé par rapport à la quantité de TiCl₃.

16. Procédé selon la revendication 15, caractérisé en ce que le système catalytique comprend également un terconstituant choisi parmi les composés électrodonneurs.

17. Procédé selon les revendications 15 et 16 appliqué à l'homo- et à la co-polymérisation du propylène en suspension dans un diluant hydrocarboné inerte.

18. Procédé selon les revendications 15 et 16 appliqué à l'homo- et à la co-polymérisation du propylène en suspension dans le monomère liquide.

19. Procédé selon les revendications 15 et 16 appliqué à l'homo- et à la co-polymérisation du propylène en phase gazeuse.

## Patentansprüche

1. Katalytischer Feststoff auf der Basis von komplexiertem Titantrichlorid zur Verwendung bei der stereospezifischen Polymerisation von alpha-Olefinen, der gemäß einem Verfahren erhalten wird, das wenigstens die folgenden Schritte umfaßt:
(a) Reduktion von Titantetrachlorid (TiCl₄) durch eine aluminiumorganische Verbindung, um einen reduzierten Feststoff auf der Basis von Titantrichlorid (TiCl₃) zu erhalten;
(b) gleichzeitige oder aufeinanderfolgende Behandlungen des reduzierten Feststoffs auf der Basis von TiCl₃ mit einer Elektronendonor-Verbindung und einer Halogenverbindung;
(c) Aktivierung durch Inkontaktbringen mit einem Aktivierungsmittel;
(d) Abtrennen des katalytischen Feststoffs von seinem Herstellungsmedium;
bei welchem der aus dem Schritt (a) hervorgegangene reduzierte Feststoff auf der Basis von TiCl₃ außerdem, bezogen auf die Menge an TiCl₃, 1 bis 1000 Gew.-% vorpolymerisiertes Ethy!en umfaßt.

2. Katalytischer Feststoff gemäß Anspruch 1, dadurch gekennzeichnet, daß das Aktivierungsmittel unter den aluminiumorganischen Verbindungen und den Produkten der Reaktion einer aluminiumorganischen Verbindung und einer hydroxyaromatischen Verbindung, deren Hydroxylgruppe sterisch blockiert ist, ausgewählt ist.

3. Katalytischer Feststoff gemäß den Ansprüchen 1 und 2, dadurch gekennzeichnet, daß er getrocknet wurde, bis sein Gehalt an flüssigem Kohlenwasserstoff-Verdünnungsmittel, bezogen auf das Gesamtgewicht an katalytischem Feststoff, kleiner oder gleich 1 Gew.-% war.

4. Katalytischer Feststoff gemäß den Ansprüchen 1 bis 3, dadurch gekennzeichnet, daß die Menge an vorpolymerisiertem Ethylen, bezogen auf das Gewicht von TiCl₃, 2 bis 20 Gew.-% beträgt.

5. Verfahren zur Herstellung eines für die stereospezifische Polymerisation von alpha-Olefinen verwendbaren katalytischen Feststoffs auf der Basis von komplexiertem Titantrichlorid, das wenigstens die folgenden Schritte umfaßt:
(a) Reduktion von Titantetrachlorid (TiCl₄) durch eine aluminiumorganische Verbindung, um einen reduzierten Feststoff auf der Basis von Titantrichlorid (TiCl₃) zu erhalten;
(b) gleichzeitige oder aufeinanderfolgende Behandlungen des reduzierten Feststoffs auf der Basis von TiCl₃ mit einer Elektronendonor-Verbindung und einer Halogenverbindung;
(c) Aktivierung durch Inkontaktbringen mit einem Aktivierungsmittel:
(d) Abtrennen des katalytischen Feststoffs von seinem Herstellungsmedium;
bei welchem der aus dem Schritt (a) hervorgegangene reduzierte Feststoff auf der Basis von TiCl₃ mit einer geringen Menge Ethylen unter polymerisierenden Bedingungen so in Kontakt gebracht wird, daß ein Feststoff erhalten wird, der, bezogen auf die Menge an TiCl₃, 1 bis 1000 Gew.-% vorpolymerisiertes Ethylen enthält.

6. Verfahren gemäß Anspruch 5, dadurch gekennzeichnet, daß sich die Vorpolymerisation des Ethylens innerhalb einer Suspension des reduzierten Feststoffs auf der Basis von TiCl₃ in einem inerten Kohlenwasserstoff-Verdünnungsmittel vollzieht.

7. Verfahren gemäß den Ansprüchen 5 und 6, dadurch gekennzeichnet, daß das Ethylen dem aus dem Reduktionsschritt (a) hervorgegangenen Reaktionsgemisch direkt hinzugefügt wird.

8. Verfahren gemäß den Ansprüchen 5 bis 7, dadurch gekennzeichnet, daß die Menge an verwendetem Ethylen, ausgedrückt bezogen auf die Menge an TiCl₃, von 2 bis 20 Gew.-% variiert.

9. Verfahren gemäß einem der Ansprüche 5 bis 8, dadurch gekennzeichnet, daß das Ethylen mit einem Partialdruck von 0,2 bis 3 bar (0,2 bis 3 kg/cm²) eingesetzt wird.

10. Verfahren gemäß einem der Ansprüche 5 bis 9, dadurch gekennzeichnet, daß das Ethylen mit dem TiCl₃ während einer Dauer von 2 Minuten bis 5 Stunden in Kontakt gebracht wird.

11. Verfahren gemäß den Ansprüchen 5 bis 10, dadurch gekennzeichnet, daß die Temperatur der Suspension des reduzierten Feststoffs auf der Basis von TiCl₃ während der Vorpolymerisation 30 bis 80 °C beträgt.

12. Verfahren gemäß den Ansprüchen 5 bis 11, dadurch gekennzeichnet, daß man bei der Vorpolymerisation ein Mittel zur Regulierung des mittleren Molekulargewichts des Prepolymers einführt.

13. Verfahren gemäß den Ansprüchen 5 bis 12, dadurch gekennzeichnet, daß die Vorpolymerisation in Gegenwart eines Silikonöls ausgeführt wird.

14. Verfahren gemäß den Ansprüchen 5 bis 13, dadurch gekennzeichnet, daß es außerdem das Trocknen des katalytischen Feststoffs auf der Basis von komplexiertem Titantrichlorid, bis sein Gehalt an flüssigem Kohlenwasserstoff-Verdünnungsmittel, bezogen auf das Gesamtgewicht an katalytischem Feststoff, kleiner oder gleich 1 Gew.-% ist, umfaßt.

15. Verfahren zur Polymerisation oder Copolymerisation von alpha-Olefinen in Gegenwart eines katalytischen Systems, das einen unter den organischen Verbindungen der Metalle der Gruppen Ia, IIa und IIIa des Periodensystems ausgewählten Cokatalysator und einen katalytischen Feststoff auf der Basis von komplexiertem Titantrichlorid umfaßt, der gemäß einem Verfahren hergestellt wurde, das wenigstens die folgenden Schritte umfaßt:
(a) Reduktion von TiCl₄ durch eine aluminiumorganische Verbindung, um einen reduzierten Feststoff auf der Basis von TiCl₃ zu erhalten;
(b) gleichzeitige oder aufeinanderfolgende Behandlungen des reduzierten Feststoffs auf der Basis von TiCl₃ mit einer Elektronendonor-Verbindung und einer Halogenverbindung;
(c) Aktivierung durch Inkontaktbringen mit einem Aktivierungsmittel;
(d) Abtrennen des katalytischen Feststoffs von seinem Herstellungsmedium;
bei welchem der in Schritt (a) erhaltene reduzierte Feststoff auf der Basis von TiCl₃ außerdem, bezogen auf die Menge an TiCl₃, 1 bis 1000 Gew.-% vorpolymerisiertes Ethylen umfaßt.

16. Verfahren gemäß Anspruch 15, dadurch gekennzeichnet, daß das katalytische System auch einen unter den Elektronendonor-Verbindungen ausgewählten dritten Bestandteil umfaßt.

17. Verfahren gemäß den Ansprüchen 15 und 16, das auf die Homo- und die Copolymerisation von Propylen in Suspension in einem inerten Kohlenwasserstoff-Verdünnungsmittel angewendet wird.

18. Verfahren gemäß den Ansprüchen 15 und 16, das auf die Homo- und die Copolymerisation von Propylen in Suspension im flüssigen Monomer angewendet wird.

19. Verfahren gemäß den Ansprüchen 15 und 16, das auf die Homo- und die Copolymerisation von Propylen in der Gasphase angewendet wird.

## Claims

1. Catalytic solid based on complexed titanium trichloride which can be used for the stereospecific polymerisation of alpha-olefins obtained according to a process comprising at least the following stages:
(a) reduction of titanium tetrachloride (TiCl₄) by an organoaluminium compound in order to produce a reduced solid based on titanium trichloride (TiCl₃) ;
(b) simultaneous or successive treatments of the reduced solid based on TiCl₃ with an electron-donating compound and a halogenated compound;
(c) activation by bringing into contact with an activation agent;
(d) separation of the catalytic solid from its preparation medium;
characterised in that the reduced solid based on TiCl₃ resulting from Stage (a) additionally comprises from 1 to 1000 % by weight of prepolymerised ethylene with respect to the amount of TiCl₃.

2. Catalytic solid according to Claim 1, characterised in that the activation agent is chosen from organoaluminium compounds and the reaction products of an organoaluminium compound and of a hydroxyaromatic compound in which the hydroxyl group is sterically blocked.

3. Catalytic solid according to Claims 1 and 2, characterised in that it has been dried until its content of liquid hydrocarbon diluent is less than or equal to 1 % by weight with respect to the total weight of catalytic solid.

4. Catalytic solid according to Claims 1 to 3, characterised in that the amount of prepolymerised ethylene is from 2 to 20 % by weight with respect to the weight of TiCl₃.

5. Process for the preparation of a catalytic solid based on complexed titanium trichloride which can be used for the stereospecific polymerisation of alpha-olefins comprising at least the following stages:
(a) reduction of titanium tetrachloride (TiCl₄) by an organoaluminium compound in order to produce a reduced solid based on titanium trichloride (TiCl₃);
(b) simultaneous or successive treatments of the reduced solid based on TiCl₃ with an electron-donating compound and a halogenated compound; (c) activation by bringing into contact with an activation agent;
(d) separation of the catalytic solid from its preparation medium;
characterised in that the reduced solid based on TiCl₃ resulting from Stage (a) is brought into contact with a small amount of ethylene under polymerising conditions so as to produce a solid containing from 1 to 1000 % by weight of prepolymerised ethylene with respect to the amount of TiCl₃.

6. Process according to Claim 5, characterised in that the prepolymerisation of ethylene is carried out in a suspension of the reduced solid based on TiCl₃ in an inert hydrocarbon diluent.

7. Process according to Claims 5 and 6, characterised in that ethylene is added directly to the reaction mixture resulting from the reduction stage (a).

8. Process according to Claims 5 to 7, characterised in that the amount of ethylene used, expressed with respect to the amount of TiCl₃, varies from 2 to 20 % by weight.

9. Process according to one of Claims 5 to 8, characterised in that ethylene is used at a partial pressure from 0.2 to 3 bars (0.2 to 3 kg/cm²).

10. Process according to any one of Claims 5 to 9, characterised in that ethylene is brought into contact with TiCl₃ for a period of time from 2 minutes to 5 hours.

11. Process according to Claims 5 to 10, characterised in that, during the prepolymerisation, the temperature of the suspension of the reduced solid based on TiCl₃ is from 30 to 80°C.

12. Process according to Claims 5 to 11, characterised in that, during the prepolymerisation, an agent for controlling the mean molecular mass of the prepolymer is introduced.

13. Process according to Claims 5 to 12, characterised in that the prepolymerisation is carried out in the presence of a silicone oil.

14. Process according to Claims 5 to 13, characterised in that it additionally comprises the drying of the catalytic solid based on complexed titanium trichloride until its content of liquid hydrocarbon diluent is less than or equal to 1 % by weight with respect to the total weight of catalytic solid.

15. Process for the polymerisation or copolymerisation of alpha-olefins in the presence of a catalytic system comprising a cocatalyst chosen from organic compounds of the metals of groups Ia, IIa and IIIa of the Periodic Table and a catalytic solid based on complexed titanium trichloride which has been prepared according to a process comprising at least the following stages:
(a) reduction of TiCl₄ by an organoaluminium compound in order to produce a reduced solid based on TiCl₃;
(b) simultaneous or successive treatments of the reduced solid based on TiCl₃ with an electron-donating compound and a halogenated compound;
(c) activation by bringing into contact with an activation agent;
(d) separation of the catalytic solid from its preparation medium;
characterised in that the reduced solid based on TiCl₃ resulting from Stage (a) additionally comprises from 1 to 1000 % by weight of prepolymerised ethylene with respect to the amount of TiCl₃.

16. Process according to Claim 15, characterised in that the catalytic system also comprises a third constituent chosen from electron-donating compounds.

17. Process according to Claims 15 and 16 applied to the homo- and copolymerisation of propylene in suspension in an inert hydrocarbon diluent.

18. Process according to Claims 15 and 16 applied to the homo- and copolymerisation of propylene in suspension in the liquid monomer.

19. Process according to Claims 15 and 16, applied to the homo- and copolymerisation of propylene in the gas phase.
